# EUROPEAN PATENT SPECIFICATION

(11) **EP 3 184 727 B1**
(45) Date of publication and mention of the grant of the patent: **19.01.2022**
(21) Application number: 16190585.6
(22) Date of filing: 26.04.2013
(51) Int. Cl.: E21B 4/02

(54) **DOWNHOLE MOTOR WITH CONCENTRIC ROTARY DRIVE SYSTEM**
BOHRLOCHMOTOR MIT KONZENTRISCHEM DREHANTRIEBSSYSTEM
MOTEUR DE FOND DE PUITS À SYSTÈME D'ENTRAÎNEMENT ROTATIF CONCENTRIQUE

(30) Priority: 27.04.2012 US 201261639762 P
(43) Date of publication of application: 28.06.2017
(62) Divisional of application: 13721235.3
(73) Proprietor: National Oilwell Varco, L.P., Houston, Texas 77036 (US)
(72) Inventor: MARCHAND, Nicholas Ryan, Edmonton, Alberta T6W 1J3 (CA); CLAUSEN, Jeffery Ronald, Houston, Texas 77066 (US); PRILL, Jonathan Ryan, Edmonton, Alberta T6X 1M3 (CA)
(74) Representative: Beck Greener LLP

(56) References cited:
- US-B1- 6 280 169
- US-B2- 6 939 117

## Description

### FIELD OF THE DISCLOSURE

The present disclosure relates in general to bearing assemblies for downhole motors used in drilling of oil, gas, and water wells. The present disclosure also relates to drive systems incorporated in such downhole motors.

### BACKGROUND

In drilling a wellbore into the earth, such as for the recovery of hydrocarbons or minerals from a subsurface formation, it is conventional practice to connect a drill bit onto the lower end of an assembly of drill pipe sections connected end-to-end (commonly referred to as a "drill string"), and then rotate the drill string so that the drill bit progresses downward into the earth to create the desired wellbore. In conventional vertical wellbore drilling operations, the drill string and bit are rotated by means of either a "rotary table" or a "top drive" associated with a drilling rig erected at the ground surface over the wellbore (or, in offshore drilling operations, on a seabed-supported drilling platform or a suitably adapted floating vessel).

During the drilling process, a drilling fluid (also commonly referred to in the industry as "drilling mud", or simply "mud") is pumped under pressure downward from the surface through the drill string, out the drill bit into the wellbore, and then upward back to the surface through the annular space between the drill string and the wellbore. The drilling fluid, which may be water-based or oil-based, is typically viscous to enhance its ability to carry wellbore cuttings to the surface. The drilling fluid can perform various other valuable functions, including enhancement of drill bit performance (e.g., by ejection of fluid under pressure through ports in the drill bit, creating mud jets that blast into and weaken the underlying formation in advance of the drill bit), drill bit cooling, and formation of a protective cake on the wellbore wall (to stabilize and seal the wellbore wall).

Particularly since the mid-1980s, it has become increasingly common and desirable in the oil and gas industry to use "directional drilling" techniques to drill horizontal and other non-vertical wellbores, to facilitate more efficient access to and production from larger regions of subsurface hydrocarbon-bearing formations than would be possible using only vertical wellbores. In directional drilling, specialized drill string components and "bottomhole assemblies" (BHAs) are used to induce, monitor, and control deviations in the path of the drill bit, so as to produce a wellbore of desired non-vertical configuration.

Directional drilling is typically carried out using a downhole motor (commonly referred to as a "mud motor") incorporated into the drill string immediately above the drill bit. A typical prior art mud motor includes several primary components, as follows (in order, starting from the top of the motor assembly):
- a top sub adapted to facilitate connection to the lower end of a drill string ("sub" being the common general term in the oil and gas industry for any small or secondary drill string component);
- a power section comprising a positive displacement motor of well-known type, with a helically-vaned rotor eccentrically rotatable within a stator section;
- a drive shaft housing configured to be straight, bent, or incrementally adjustable between zero degrees and a maximum angle;
- a drive shaft enclosed within the drive shaft housing, with the upper end of the drive shaft being operably connected to the rotor of the power section; and
- a bearing section comprising a cylindrical mandrel coaxially and rotatably disposed within a cylindrical housing, with an upper end coupled to the lower end of the drive shaft, and a lower end adapted for connection to a drill bit.

The mandrel is rotated by the drive shaft, which rotates in response to the flow of drilling fluid under pressure through the power section. The mandrel rotates relative to the cylindrical housing, which is connected to the drill string.

Conventional mud motors include power sections that use either a Moineau drive system or a turbine-type drive system. These types of power sections are relatively long, with typical lengths of 4.6 to 6.1 meters (15-20 feet) for Moineau-type power sections and 6.1 to 9.1 meters (20-30 feet) for turbines for motor sizes between 0.13 to 0.2 meters (5" and 8") in diameter. For directional drilling with a bent motor assembly, it is optimal to position the bend within a few feet of the bit in order to achieve suitable levels of hole curvature and reasonable steerability of the assembly. Having the bend located above the power section or turbine would be too great a distance from the bit to be effective, so this requires the bend to be located below the power section or turbine. The bend is typically incorporated within the drive shaft housing. The driveshaft typically comprises universal joints to accommodate the angular misalignment between the power section and bearing assembly, as well as the eccentric operation in the case of a Moineau power section. The driveshaft U-joints and threaded connections are typically the weakest parts of the motor assembly and the most common locations for fractures to occur.

U.S. Patents No. 6,280,169, No. 6,468,061, No. 6,939,117, and No. 6,976,832 disclose similar types of fluid-powered rotary drive mechanisms. These mechanisms are capable of outputting levels of rotary speed and torque comparable to Moineau and turbine-type power sections, but in power sections as short as one to three feet in length. These mechanisms comprise a system of longitudinal lobes and gates, with intake and exhaust ports for directing fluid to build pressure between the lobes and gates to drive the rotation of the motor. The mechanisms operate with concentric rotation between the inner shaft and outer housing. The shorter length and concentric operation allow any of these drive systems to be incorporated directly within or attached to the mud motor bearing assembly, with no need for a driveshaft assembly with universal joints. The fixed or adjustable bent housing can be attached above the drive section while maintaining a bit-to-bend length that is as short as or shorter than in conventional downhole motors. The resulting overall length of the motor is dramatically shorter than in conventional assemblies.

These drive mechanisms do not require any elastomeric elements, in contrast to Moineau-type drive systems which incorporate elastomeric stator elements that limit the operational temperature for a Moineau-type system to a maximum of about 163°C to 177°C (325-350° F). Additionally, the performance of Moineau-type drive systems tapers off sharply above 60°C (140° F). Therefore, these concentrically-operating drive systems are suitable for use in extremely high temperature and geothermal applications (260+ °C; 500+ degrees F) that are beyond the limits of Moineau-type systems, with little or no drop in performance.

### BRIEF SUMMARY

According to the present invention, there is provided a system, comprising a bearing assembly including a cylindrical housing and an elongate mandrel coaxially and rotatably disposed in the cylindrical housing, the mandrel having a first end configured to couple to a drill bit, a second end opposite the first end, and a central bore extending axially from the first end to the second end; a rotary drive system coupled to the bearing assembly and including: a rotor rotatably disposed within the housing; an annular space between the rotor and the housing; wherein the rotor includes a central rotor axis, a first end, a second end opposite the first end, a rotor bore extending axially from the first end to the second end, a plurality of fluid inlet ports extending radially from the rotor bore to the annular space, and a plurality of fluid outlet ports extending radially from the annular space to the rotor bore; wherein the first end of the rotor is coupled to the second end of the mandrel; a plurality of elongate gates disposed within the annular space, each of the plurality of elongate gates configured to engage the rotor and the housing; and a plurality of longitudinal lobes extending radially within the annular space; wherein the plurality of longitudinal lobes and the plurality of elongate gates divide the annular space into a plurality of circumferentially adjacent, axially extending longitudinal chambers; a first fluid flow path defined by the annular space between the plurality of inlet ports and the plurality of outlet ports; wherein the rotor is configured to rotate relative to the housing when a fluid is circulated along the first fluid flow path; wherein the mandrel and the rotor are coaxially aligned.

The present disclosure teaches a downhole motor incorporating a drive system comprising a system of longitudinal lobes and gates, with intake and exhaust ports for directing fluid to build pressure between the lobes and gates to drive the rotation of the motor. Preferably, the drive system is connected concentrically to the bearing assembly while maintaining a short enough length to allow the bent housing to be located above the drive section, and negating the need for a driveshaft to connect the drive section to the bearing section as in prior art mud motors. Alternatively, the bend may be positioned below the drive section in combination with the use of a driveshaft assembly to connect the drive section to the bearing section, in order to position the bend as close as possible to the bit.

In an embodiment, the second end of the mandrel is directly connected to the first end of the rotor.

In an embodiment, the second end of the mandrel is directly connected to the first end of the rotor with one of a splined connection, a threaded connection, and corresponding mating lugs. In an embodiment, the second end of the mandrel is coupled to the first end of the rotor with a coupling member.

In an embodiment, the coupling member includes: a first end; a second end opposite the first end; internal threading disposed on the first end; and splines disposed on the second end; wherein the second end of the mandrel includes external threading that is configured to engage with the internal threading on the first end of the coupling member; and wherein the first end of the rotor includes splines that are configured to engage with the splines disposed on the second end of the coupling member.

In an embodiment, the system further comprises a bent housing, wherein the rotary drive system is axially disposed between the bearing assembly and the bent housing.

In an embodiment, each of the plurality of elongate gates is pivotally coupled to the housing and each is configured to pivot about a pivot axis that is parallel to and radially spaced from the rotor axis.

In an embodiment, each of the plurality of elongate gates has a free edge and wherein the free edge is biased into engagement with the rotor.

In an embodiment, the system further comprises: a bent housing coupled to the an end of the housing such that the rotary drive system is disposed between the bent housing and the bearing assembly.

In an embodiment, the bearing assembly further includes a first radial bearing and a second radial bearing; wherein the first radial bearing and the second radial bearing are each configured to support radially directed loads with respect to the central mandrel axis; and wherein the first radial bearing is proximate the first end of the rotor and the second radial bearing is proximate the second end of the rotor.

In an embodiment, each and every one of the fluid inlet ports is axially spaced from each and every one of the fluid outlet ports; and wherein the system further comprises a flow control assembly disposed in the rotor bore and configured to control the flow of the fluid along the first flow path to regulate one of a rotational speed of the rotor or a torque applied to the rotor.

In an embodiment, the system further comprises: a second fluid flow path defined by the rotor bore between the plurality of inlet ports and the plurality of outlet ports; wherein the flow control assembly selectively diverts a portion of the fluid to the second flow path when a differential pressure between the plurality of inlet ports and the plurality of outlet ports reaches a pre-determined value.

In an embodiment, the flow control assembly comprises a relief valve.

In an embodiment, the flow control assembly is axially disposed between the plurality of fluid inlet ports and the plurality of fluid outlet ports.

The present disclosure teaches a rotary fluid drive system comprising:
- a first body and a second body, with a selected one of the bodies being coaxially disposed inside the other body to define a working fluid space therebetween, and with the second body being rotatable relative to the first body about a rotational axis;
- at least one gate supported by a selected one of the first and second bodies, such that each gate can swing or pivot about an axis parallel to the rotational axis;
- at least one lobe provided on the body not supporting the at least one gate;
- one or more fluid inlet ports directing fluid flow into the working fluid space; and
- one or more fluid outlet ports axially spaced from the fluid inlet ports and directing fluid flow out of the working fluid space;
   wherein:
   - for each gate, the body supporting the at least one gate defines a gate pocket into which the associated gate can swing when contacted by a lobe;
   - each gate pocket and associated gate are relatively configured to form a debris chamber therebetween, capable of accommodating debris when the associated gate is disposed therewithin; and
   - the rotary fluid drive system defines a fluid path through which a working fluid can enter and exit the drive system, wherein the fluid path includes the fluid inlets, the working fluid space, and the fluid outlets, such that a flow of a working fluid along the fluid path will cause rotation of the second body relative to the first body.

In certain examples, each gate and its associated gate pocket are relatively configured to form at least one gate pocket flow path through which fluid can flow from between the gate pocket and the gate and into the working fluid space, when the gate has swung to a maximum extent into the gate pocket. In such examples, each gate (which will have a free longitudinal edge) and its associated gate pocket may be relatively configured so that when a gate has swung to the maximum extent into its associated gate pocket, the longitudinal edge will face and be spaced from a wall of the gate pocket so as to create a downstream portion of the gate pocket flow path.

In certain examples, a plurality of spaced projections may be formed on a surface of each gate surface facing its associated gate pocket, with the space or gap between adjacent projections creating an associated upstream portion of the pocket flow path. In such examples, the projections and the gate pockets may be relatively configured such that the projections can abut a surface of the gate pocket when the gate is swung to the maximum extent into its associated gate pocket. Preferably, though not necessarily, the projections will be evenly spaced along a length of a respective gate. The gaps between the projections may be sized such that the cumulative length of the gaps on each gate will correspond to at least 10% of the length of the gate. In alternative examples, the cumulative length of the gaps may correspond to at least 30% of the gate length, and in other examples it may correspond to up to 90% of the gate length.

Preferably, though not necessarily, each gate may have associated biasing means (such as a spring, by way of non-limiting example) to bias the gate to swing in a direction away from its associated gate pocket and toward the body provided with the at least one lobe. In examples provided with biasing means comprising a spring, the spring may extend along and within a longitudinal bore formed in the associated gate. In such examples, one end of each spring may be held rotationally fixed relative to the associated gate; optionally, that end of each spring may be keyed into a portion of the body provided with the gate pockets.

The inlet ports may be located upstream of the outlet ports, having reference to a direction of flow of the working fluid along the fluid path.

The rotary fluid drive may include a flow control mechanism disposed within the second body at a selected point between the inlet ports and the outlet ports.

In certain examples of the rotary fluid drive, the first body is disposed inside the second body. In alternative examples, the second body is disposed inside of the first body.

The present disclosure teaches a rotary fluid drive system comprising:
- a first body and a second body, with a selected one of the bodies being coaxially disposed inside the other body to define a working fluid space therebetween, and with the second body being rotatable relative to the first body about a rotational axis;
- at least one gate supported by a selected one of the first and second bodies, such that each gate can swing or pivot about an axis parallel to the rotational axis;
- at least one lobe provided on the body not supporting the at least one gate;
- one or more fluid inlet ports directing fluid flow into the working fluid space; and
- one or more fluid outlet ports axially spaced from the fluid inlet ports and directing fluid flow out of the working fluid space;
   wherein:
   - for each gate, the body supporting the at least one gate defines a gate pocket into which the associated gate can swing when contacted by a lobe;
   - each gate has a surface facing the associated gate pocket and having a plurality of projections, with gaps between adjacent projections defining a gate pocket flow path;
   - the rotary fluid drive system defines a fluid path through which a working fluid can enter and exit the drive system, wherein the fluid path includes the fluid inlets, the working fluid space, and the fluid outlets, such that a flow of a working fluid along the fluid path will cause rotation of the second body relative to the first body; and
   - a working fluid can flow via each gate pocket flow path from the associated gate pocket into the working fluid space when the associated gate is maximally deflected into its associated gate pocket.

In certain examples, each gate (which will have a free longitudinal edge) and its associated gate pocket may be relatively configured so that when a gate has swung to the maximum extent into its associated gate pocket, the longitudinal edge will face and be spaced from a wall of the gate pocket so as to create a downstream portion of the gate pocket flow path.

Preferably, though not necessarily, the projections will be evenly spaced along a length of a respective gate. The gaps between the projections may be sized such that the cumulative length of the gaps on each gate will correspond to at least 10% of the length of the gate. In alternative examples, the cumulative length of the gaps may correspond to at least 30% of the gate length, and in other examples it may correspond to up to 90% of the gate length.

Preferably, though not necessarily, each gate may have associated biasing means (such as a spring, by way of non-limiting example) to bias the gate to swing in a direction away from its associated gate pocket and toward the body provided with the at least one lobe. In examples provided with biasing means comprising a spring, the spring may extend along and within a longitudinal bore formed in the associated gate. In such examples, one end of each spring may be held rotationally fixed relative to the associated gate; optionally, that end of each spring may be keyed into a portion of the body provided with the gate pockets.

The inlet ports may be located upstream of the outlet ports, having reference to a direction of flow of the working fluid along the fluid path.

The rotary fluid drive may include a flow control mechanism disposed within the second body at a selected point between the inlet ports and the outlet ports.

The present disclosure teaches a drilling motor including:
- a bearing assembly comprising: a generally cylindrical housing having an upper end and a lower end; a generally cylindrical mandrel having an upper end, a lower end, and a longitudinal bore, with the mandrel being coaxially disposed within the housing so as to be rotatable relative thereto about a rotational axis; radial bearing means disposed in an annular space between the housing and the mandrel; and thrust bearing means disposed in an annular space between the housing and the mandrel;
- a generally cylindrical rotor having an upper end, a lower end, and a longitudinal bore, with the rotor being coaxially disposed within the housing so as to define a generally annular working fluid space therebetween, and with the rotor operatively engaging the mandrel so as to be rotatable therewith;
- a plurality of elongate gates;
- at least one axially-oriented lobe engageable with the gates during relative rotation between the rotor and the housing;
- one or more fluid inlets allowing fluid flow from an upper region of the rotor bore into the working fluid space; and
- one or more fluid outlets allowing fluid flow out of the working fluid space into a lower region of the rotor bore;
wherein the drilling motor defines a fluid path including the fluid inlets, the working fluid space, and the fluid outlets, such that a flow of a working fluid along the fluid path will cause relative rotation between the rotor and the housing, thereby causing each lobe to deflect each gate in sequence.

In some examples, the gates may be supported by the housing and pivotable about a pivot axis parallel to the rotational axis. In other examples, the gates may be supported by the rotor and pivotable about a pivot axis parallel to the rotational axis. In still other examples, the gates may be radially-actuating and supported by the housing or, alternatively, radially-actuating and supported by the rotor.

The drilling motor may include biasing means associated with the gates, for biasing the gates away from the component supporting the gates.

The drilling motor may be configured such that the mandrel engages the rotor so as to be coaxially rotatable therewith. Such coaxially rotatable engagement of the mandrel and the rotor may be effected by any functionally effective means, such as, without limitation:
- by means of a splined connection, with an upper portion of the mandrel coaxially disposed within the bore of the rotor;
- by means of respective mating lugs provided on the upper end of the mandrel and the lower end of the rotor;
- by means of a clutch mechanism disposed between the upper end of the mandrel and the lower end of the rotor;
- by means of a gear box disposed between the upper end of the mandrel and the lower end of the rotor;
- by means of a generally cylindrical coupling having a lower section with internal threading matingly engageable with external threading on the upper end of the mandrel, and having an upper section with internal splines matingly engageable with external splines on the lower end of the rotor;
- by means of a drive shaft having an upper end rigidly and coaxially engaging the lower end of the rotor, and a lower end incorporating a universal joint which engages a drive shaft housing coupled to the upper end of the mandrel; or
- by means of a drive shaft having an upper end incorporating an upper universal joint engaging an upper drive shaft housing coupled to the lower end of the rotor, and a lower end incorporating a lower universal joint which engages a drive shaft housing coupled to the upper end of the mandrel.

The housing of the drilling motor may incorporate a bent sub, which optionally may be either a fixed bent sub or an adjustable bent sub. In certain examples the bent sub will be located above the rotor; generally speaking, however, the location of the bent sub, when provided, will be a matter of design choice having regard to operational parameters. For example, in some examples a bent sub may be positioned below the rotor. In examples incorporating a drive shaft coaxially engaging the rotor and engaging the mandrel by means of a universal joint, a bent sub may be positioned proximal to the universal joint. In examples incorporating a drive shaft having upper and lower universal joints, a bent sub may be positioned between the universal joints.

In certain examples, the radial bearing means may be adapted to transfer radial loads from the mandrel to the housing through the rotor, such as, by way of non-limiting example, by adapting the rotor to serve as a radial bearing.

Optionally, the drilling motor may comprise flow control means, for altering the characteristics of fluid flow through the motor to regulate the rotational speed of the motor. In certain examples, the flow control means may be configured to allow fluid to bypass the working fluid space when the pressure differential across the working fluid space exceeds a pre-set value. In other examples, the flow control means may comprise, by way of non-limiting example:
- a relief valve coaxially disposed within the rotor;
- a plate integral with a selected one of the mandrel and the rotor, and positioned to separate flow between the fluid inlets and the fluid outlets;
- a nozzle for continuously bypassing a portion of the fluid flow through the rotor;
- a burst disc positioned to separate flow between the fluid inlets and the fluid outlets; or
- means for diverting fluid to the exterior of the housing.

### BRIEF DESCRIPTION OF THE DRAWINGS

Embodiments and examples in accordance with the present disclosure will now be described with reference to the accompanying Figures, in which numerical references denote like parts, and in which:
**FIG. 1** is a longitudinal cross-section through a bearing assembly incorporating an example of a rotary drive system not forming part of the claimed invention.
**FIG. 2** is an enlarged longitudinal cross-section through the bearing assembly and rotary drive system shown in FIG. 1.
**FIG.** 3 is a transverse cross-section through the rotary drive system shown in FIGS. 1 and 2.
**FIG.** 4 is an isometric view of one embodiment of one of the gates used in the rotary drive system shown in FIG. 3.
**FIG. 4A** is an isometric view of a torsion rod for use in conjunction with a gate as FIG. 4.
**FIG. 4B** is an isometric view of a gate preload ring for use in conjunction with torsion rods as in FIG. 4A.
**FIG.** 5 is an isometric cross-section through the housing of the rotary drive system shown in FIGS. 1 to 3.
**FIG.** 6 is an isometric cross-section through the rotary drive system shown in FIGS. 1 to 3, but with the mandrel and rotor not shown.
**FIGS. 7** **and** **8** are cross-sections through the rotary drive system as in FIG. 3, showing the lobed shaft in different rotational positions relative to the housing.
**FIG. 9** is a longitudinal cross-section through a bearing assembly incorporating an embodiment of the present invention, in which the rotor of the rotary drive system engages the mandrel of bearing section in end-to-end relation.
**FIG. 9A** is a longitudinal cross-section through a variant of the bearing assembly in FIG. 9.
**FIG. 10** is an enlarged sectional detail of one example of a relief valve system for use in conjunction with rotary drive systems in accordance with the present disclosure.
**FIG. 11** is an enlarged sectional detail of a variant of the relief valve shown in FIG. 10.
**FIG. 12** is a cross-sectional detail of an end-to-end connection between the rotor and mandrel in an alternative embodiment of a rotary drive system in accordance with the present invention, using a threaded and splined connector.
**FIGS. 12A and 12B** are isometric and cross-sectional views, respectively, of the threaded and splined connector in FIG. 12.
**FIG. 13** is a longitudinal cross-section through an alternative example of a downhole motor incorporating a concentric rotary drive system in accordance with the present disclosure, in which the bent housing is located below the rotary drive system and the rotary drive system is operatively connected to the motor's bearing section by a drive shaft having a single U-joint.
**FIG. 13A** is an enlarged cross-sectional view of the bent housing and drive shaft of the downhole motor in FIG. 13.
**FIG. 14** is a longitudinal cross-section through a further example of a downhole motor incorporating a concentric rotary drive system in accordance with the present disclosure, in which the rotary drive system is connected to a conventional bearing section by means of a conventional drive shaft having two U-joints.

### DETAILED DESCRIPTION

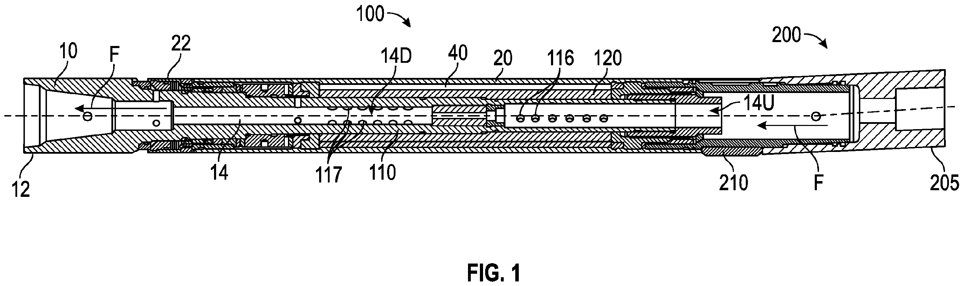

The Figures illustrate various embodiments and alternative examples of downhole motors in accordance with the present disclosure. FIG. 1 illustrates a bearing assembly **100** comprising a first embodiment **110** of a concentric rotary drive system connected at its upper end to the lower end of a bent housing **200,** which incorporates a fixed or adjustable bent sub **210.** Although the illustrated bearing assembly incorporates a bent housing, it is to be understood that this is not essential, as the bearing assembly and rotary drive systems in accordance with the present disclosure could alternatively be run without a bent housing (i.e., when drilling a straight or undeviated section of a wellbore).

Bearing assembly **100** includes an elongate mandrel **10** coaxially disposed within a generally cylindrical housing **20** so as to be rotatable relative thereto, with the lower end **12** of mandrel **10** projecting from the lower end **22** of housing **20** and being adapted for connection to a drill bit or other BHA components below the motor. Mandrel **10** has a central bore **14** for passage of a working fluid such as a drilling fluid. The upper end **205** of bent housing **200** is adapted for connection to the drill string or to other BHA components above the motor.

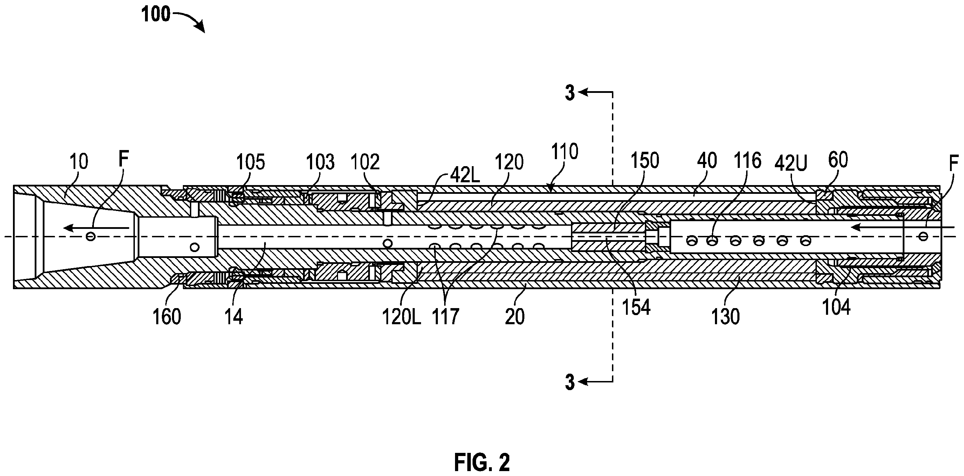

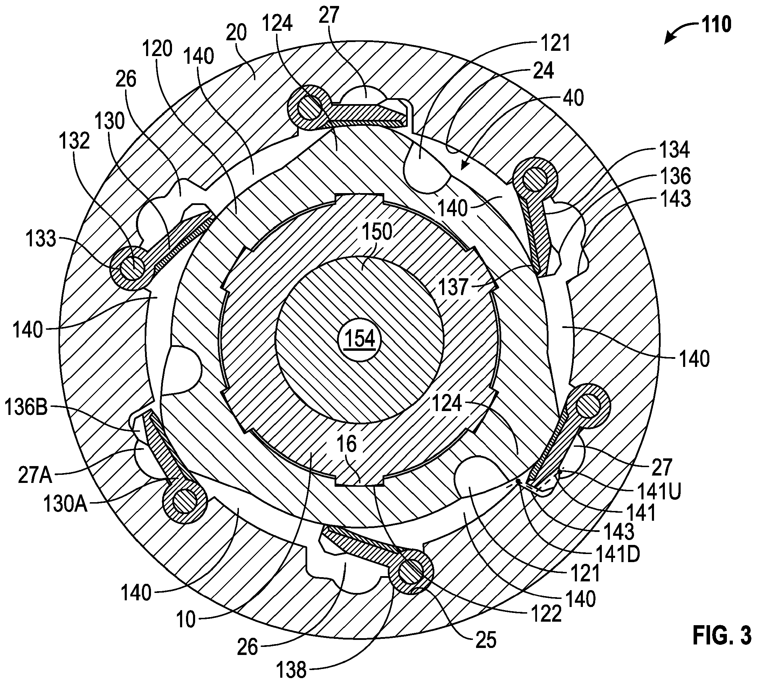

The primary features of the bearing assembly **100** and rotary drive system **110** in FIG. 1 are illustrated in greater detail in FIGS. 2 and 3. Rotary drive system **110** includes a generally cylindrical central shaft **120** (alternatively referred to as rotor **120**) concentrically coupled to mandrel **10** so as to be rotatable therewith, and within housing **20**. Accordingly, a generally annular space **40** is formed between rotor **120** and housing **20**. Annular space **40** is alternatively referred to herein as a working fluid space **40**. End plates **42U** and **42L** are fixed within housing **20** and define the upper and lower boundaries of working fluid space **40**. End plates **42U** and **42L** also serve to constrain the axial position of rotor **120** relative to housing **20**.

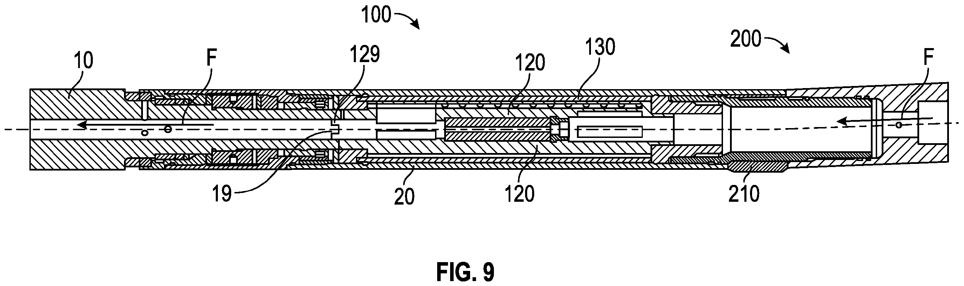

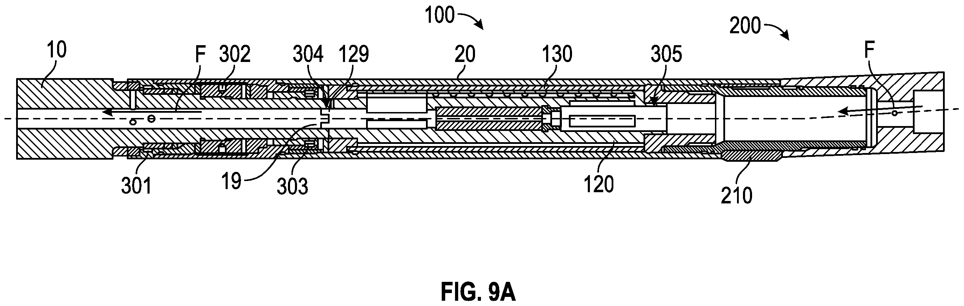

In the illustrated example, rotor **120** is concentrically coupled to mandrel **10** by means of a splined connection as shown in FIG. 3, with splines **16** projecting from the outer surface of mandrel **10** engaging mating grooves **122** on the inner surface of the bore of rotor **120**. However, rotor **120** could be co-rotatably coupled to mandrel **10** by other means. By way of non-limiting example only, mandrel **10** and rotor **120** could abut each other in end-to-end relation, while being rotatably coupled by a mechanism comprising mating axially-aligned lugs on each component, as in the embodiment in accordance with the invention shown in FIG. 9 (in which the mating lugs on mandrel **10** and rotor **120** are indicated by reference numbers **19** and **129** respectively). Other preferred embodiments of the invention may include means for rotatably coupling mandrel **10** and rotor **120** in end-to-end relation which include threaded connections, splined connections, gear boxes, and clutch mechanisms in accordance with known technologies.

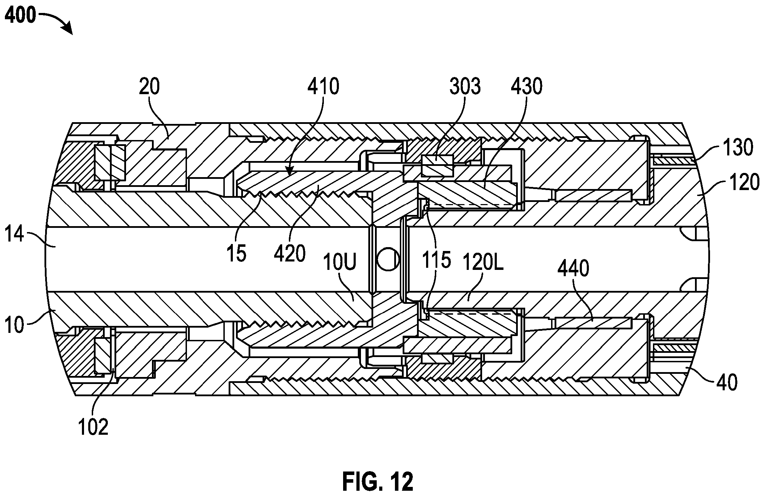

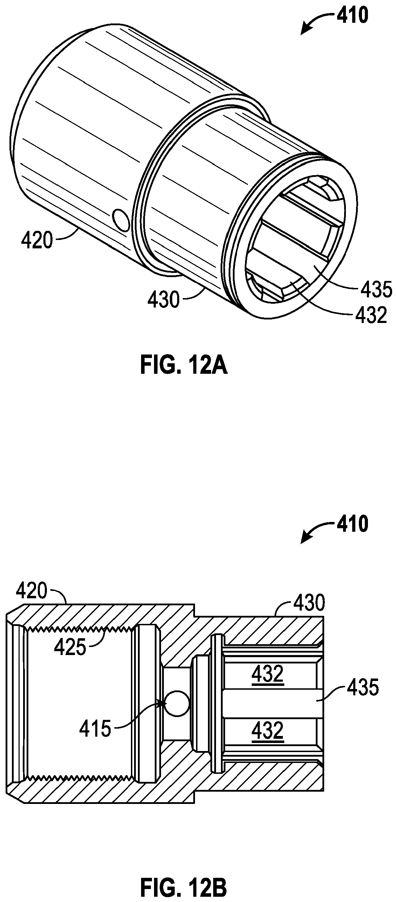

By way of non-limiting example, FIG. 12 depicts an alternative embodiment **400** of a bearing section incorporating a rotary drive system in accordance with the present invention, in which a threaded and splined coupling **410** is used to transfer torque from rotor **120** to mandrel **10**. In this example, rotor **120** is supported by its own set of radial bearings **440** on both ends of the rotor (only lower radial bearings **440** are shown in FIG. 12).

As shown in FIGS. 12, 12A, and 12B, coupling **410** comprises a lower cylindrical section **420** having internal threading **425**, and an upper generally cylindrical section **430** the bore of which defines longitudinal splines **432** and grooves **435**. Upper and lower sections **430** and **420** are coaxially contiguous, with a central bore **415** in the transition section between upper and lower sections **430** and **420**. The upper end **10U** of mandrel **10** in this embodiment is provided with external threading **15** engageable with internal threading **425** in lower section **420** of coupling **410**. The lower end **120L** of rotor **120** is formed with splines **115** engageable with grooves **435** on upper section **430** of coupling **410**.

As shown in FIGS. 1, 2, 5, 7, and 8, fluid inlet ports **116** are provided through mandrel **10** and rotor **120** in an upstream region of rotor **120** to allow fluid flow from mandrel bore **14** into working fluid space **40**, and fluid outlet ports **117** are provided through rotor **120** and mandrel **10** in a downstream region of rotor **120** to allow fluid flow from working fluid space **40** back into mandrel bore **14**. Accordingly, rotary drive system **110** can be considered as defining a fluid path through the rotary drive system, extending between a fluid intake zone in an upstream region **14U** of mandrel bore **14**, through inlet ports **116** into working fluid space **40**, and out of working fluid space **40** through outlet ports **117** into a fluid exit zone in a downstream region **14D** of mandrel bore **14** proximal to the lower end **120L** of rotor **120,** from which zone fluid flow can continue within mandrel bore **14** toward the bit.

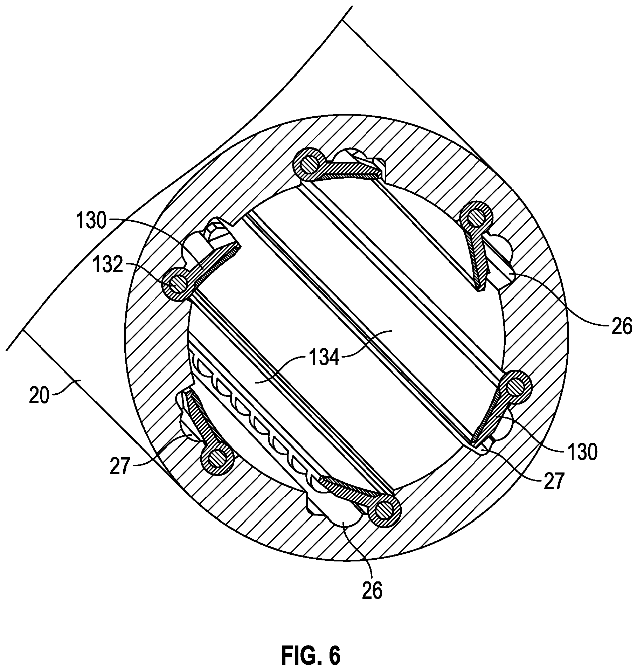

As best seen in FIGS. 3, 5, 7, and 8 the outer perimeter surface of rotor **120** defines a plurality of uniformly-spaced longitudinal rotor lobes **124**. As best seen in FIGS. 3, 5, 6, 7, and 8, a plurality of elongate gates **130** are pivotably mounted within respective elongate gate-receiving pockets **26** in the inner surface **24** of the bore of housing **20**.

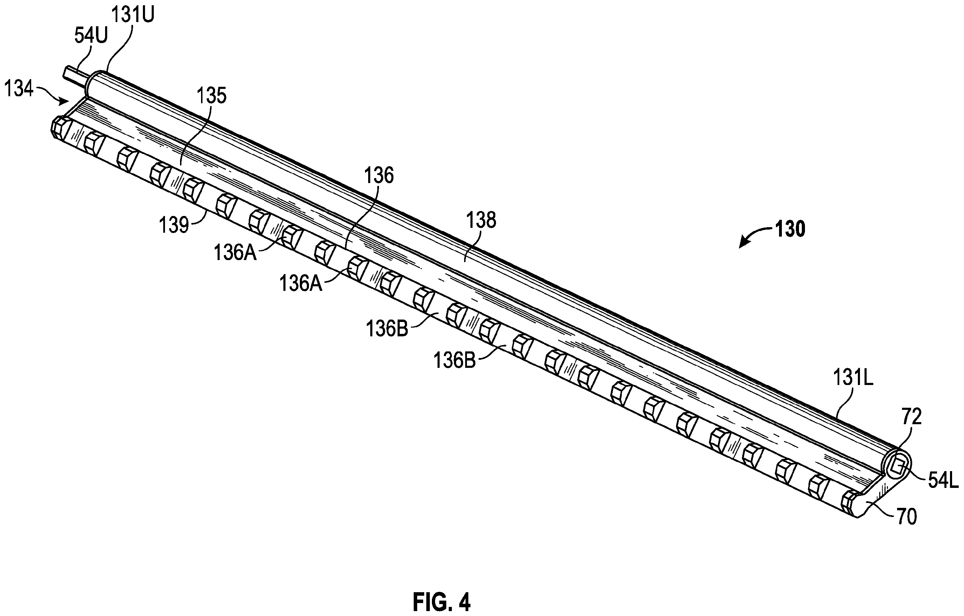

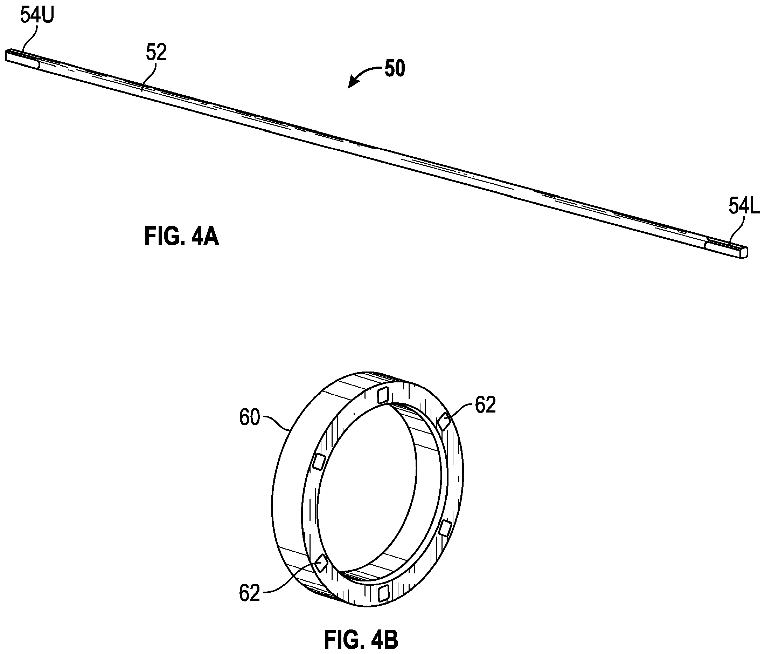

FIG. 4 illustrates one example of a gate **130** in accordance with the present disclosure. In this example, gate **130** has ends **131** (which may be designated upper and lower ends **131U** and **131L** depending on the orientation of gate **130** in a given example of the drive system) and an elongate blade member **134** with a first blade surface **135** oriented toward the associated gate pocket **26**. The radially-outer end of blade member **134** has a longitudinal free edge **139** configured for substantially fluid-tight contact with the outer surfaces of rotor **120** (including, as the operational case may be, rotor lobes **124**). Free edge **139** of blade member **134** preferably (but not necessarily) has a thickened or bulbous section **136** projecting from first blade surface **135**. Thickened section **136** may be continuous or, as shown in FIGS 3-8, it may form a plurality of spaced projections **136A** extending from blade surface **135** toward the associated gate pocket **26**, with gaps **136B** being formed between adjacent projections **136A.**

The inner surface **24** of the bore of housing **20** is formed with elongate gate pockets **26** such that as lobed rotor **120** rotates within housing **20**, rotor lobes **124** will sequentially engage gates **130** and deflect them into their associated gate pockets **26** in housing **20** so that rotor lobes **124** can pass by. Each gate **130** thus pivots between a lowered position (i.e., in contact with or closely adjacent to rotor **120**) when located between adjacent rotor lobes **124,** and a raised (or deflected) position when displaced into its associated gate pocket **26** by a passing rotor lobe **124**.

Optionally, projections **136A** and gate pockets **26** may be configured such that projections **136A** of a given gate **130** will abut a surface of the associated gate pocket **26** when gate **130** is maximally deflected into gate pocket **26**. Preferably, projections **136A** are evenly spaced along the length of gate **130**. In one example, the cumulative length of gaps **136B**, as measured along the length of gate **130**, corresponds to at least 10% of the gate length. In an alternative example, the cumulative length of gaps **136B** corresponds to at least 30% of the gate length. In yet another example, the cumulative length of gaps **136B** corresponds to as much as 90% of the gate length.

In preferred examples, each gate pocket **26** incorporates a debris slot or chamber **27**, to accommodate or receive large particulate matter that might be present in the drilling fluid and which might otherwise impede full deflection of the associated gate **130** into gate pocket **26** by the passing rotor lobes **124**. This can be best appreciated with reference to FIG. 3, in which an exemplary gate denoted by reference character **130A** is shown fully deflected into its associated gate pocket **26A**. Oversize matter carried by the drilling fluid can temporarily reside within debris chamber **27A** as rotor lobes **124** pass by, rather than becoming lodged behind gate **130A** and impeding full deflection of gate **130A** into gate pocket **26A**, as might otherwise happen if the gate pockets were configured to closely match the profile of gates **130**.

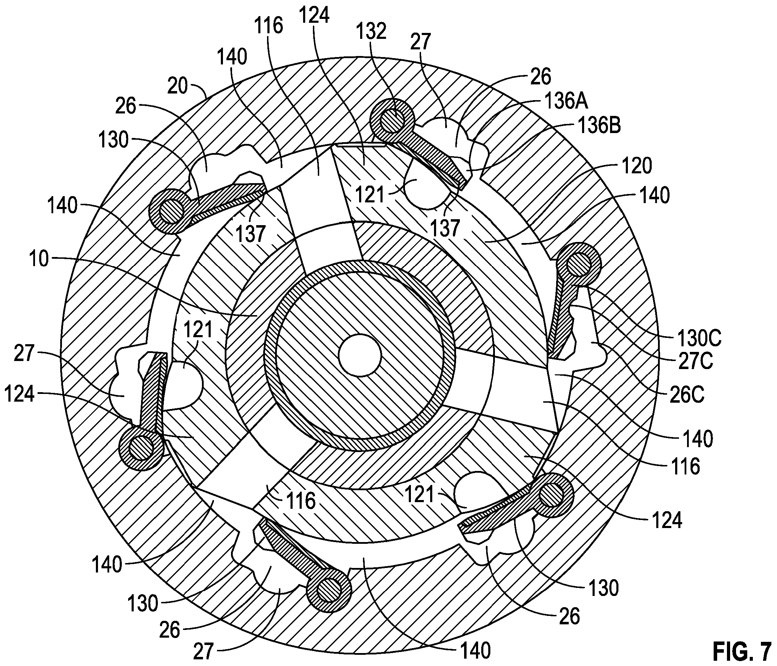

FIG. 7 illustrates a variant gate denoted by reference number **130C**, having a debris channel **27C** formed in its outer face, and there is no debris chamber **27** formed into the variant gate pocket **26C** associated with gate **130C**.

Preferably, each gate **130** and associated gate pocket **26** are relatively configured to form at least one gate pocket flow path (denoted by dotted line **141** in FIG. 3), such that fluid can flow out of gate pocket **26** into working fluid space **40** even when gate **130** is maximally deflected into gate pocket **26**. In the example shown in FIG. 3, gate pocket flow path **141** includes an upstream portion **141U** co-extensive with gaps **136B** in thickened section **136**. Gates **130** and gate pockets **26** are configured so that when a gate **130** is maximally deflected into its associated gate pocket **26**, the gate's free longitudinal edge **139** is spaced from a longitudinal wall **143** of the gate pocket to create a downstream portion **141D** of gate pocket flow path **141**, in fluid communication with working fluid space **40**.

As best understood with reference to FIGS. 2, 3, 7, and 8, with gates **130** being biased into substantially fluid-tight contact with rotor **120**, working fluid space **40** between rotor **120** and housing **20** is divided into longitudinal chambers **140** between rotor lobes **124** and adjacent gates **130.** Longitudinal chambers **140** are bound at either end by end plates **42U** and **42L.** In operation, a pressurized working fluid (such as drilling mud pumped from surface, as conceptually indicated by flow arrows **F** in various of the Figures) is introduced into rotary drive system **110** through inlet ports **116,** thus pressurizing (at any given time) one or more longitudinal chambers **140** and inducing rotation of rotor **120** (and mandrel **10** along with it) relative to housing **20.** Opposite the high pressure side of the lobe, the fluid is directed through fluid outlet ports **117** and onward through the bit.

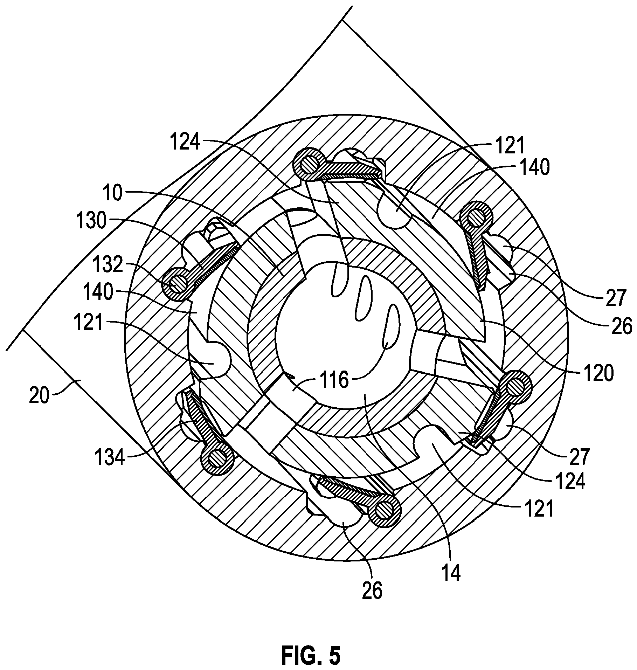

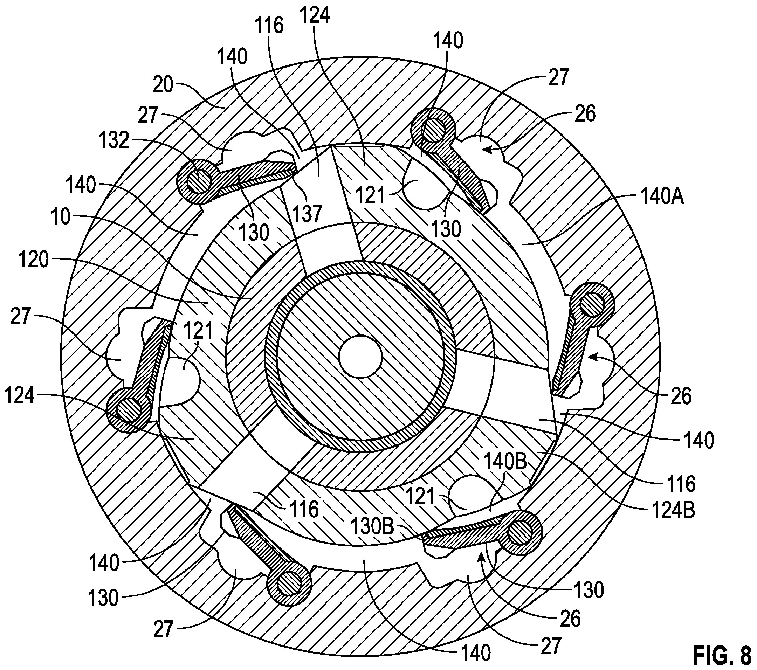

As may be appreciated with reference to FIGS. 7 and 8 in particular, the configuration and volume of each longitudinal chamber **140** will change as rotor **120** rotates within and relative to housing **20.** For example, FIG. 8 illustrates a first longitudinal chamber denoted by reference character **140A** having a comparatively large volume, and a second longitudinal chamber denoted by reference character **140B** having a greatly reduced volume as a rotor lobe **124B** approaches the associated gate **130B.** Accordingly, fluid must be conveyed out of chambers **140** to prevent the build-up of excessive fluid pressure. This is accomplished in the illustrated examples by forming rotor **120** with pressure relief channels **121** to convey drilling fluid from chambers **140** to fluid outlet ports **117** (as may be seen in FIGS. 3 and 5).

The pivotability of gates **130** may be enabled by any suitable means, and examples within the scope of the present disclosure are not limited or restricted to the use of any particular pivoting means. To provide one non-limiting example, each gate **130** may be provided with a longitudinal pin bore **133** generally as shown in FIG. 3, for receiving elongate pivot pins, the ends of which are rotatably received within pockets or bearings associated with housing **20.** In the specifically illustrated examples, however, gates **130** are pivotably retained within cylindrical pivot pockets **25** formed in housing **20.** In the example shown in FIG. 4, each gate **130** has an elongate convexly-cylindrical surface **138** which is matingly receivable within a corresponding cylindrical pivot pocket **25** to form a cylindrical pivot interface. In the illustrated example, the cylindrical portions of pivot pockets **25** extend around an arc greater than 180 degrees, such the pivot pockets fully retain the gates without need for pivot pins as such; in effect, the portions of gates **130** having cylindrical surfaces **138** function as pivot pins.

Preferably, gates **130** are provided with biasing means for biasing gates **130** away from housing **20** and into substantially sealing contact with rotor **120.** Such biasing means could comprise torsion rod springs, torsion coil springs, cam bodies, fluid pressure, or any other suitable mechanical or hydraulic means. In one example, and with particular reference to FIGS. 4, 4A, and 4B, the biasing means may comprise torsion rods **50** disposed within pin bores **133** provided in gates **130** as shown in FIG. 3. Each torsion rod **50** has a central section **52** of circular cross-section extending between upper and lower end sections **54U** and **54L** which are configured for engagement with rotational restraint means.

In the example shown in FIG. 4A, this rotational restraint is enabled by forming upper and lower end sections **54U** and **54L** to be square in cross-section. FIG. 4B illustrates a gate preload ring **60** having a plurality of square holes **62** corresponding in number to the number of gates **130** in the rotary drive system **110**, with square holes **62** being sized for mating engagement with upper end section **54U** of torsion rod **50**. In the example shown in FIGS. 1 and 2, preload ring **60** is coaxially fixed to housing **20** immediately above end plate **42U** so as to be non-rotatable relative to housing **20**, such that in the assembled drive system upper end **54U** of each torsion rod **50**, projecting from the upper end of its associated pin bore **133** at upper end **131U** of the associated gate **130**, will be matingly disposed within one of the square holes **62** in gate preload ring **60**. The upper ends of torsion rods **50** will thus be restrained against rotation relative to housing **20**, but the upper ends of torsion rods **50** will be unrestrained against rotation within the pin bores **133** of their associated gates **130** and relative to the upper ends **131U** thereof.

However, as may be understood with reference to FIG. 4, the lower ends **54L** of torsion rods **50** will be restrained against rotation relative to the lower ends **131L** of their associated gates **130**. In this example, lower end **131L** of gate **130** is fitted with a cap member **70** having a square hole **72** for matingly receiving the square lower end **54L** of a torsion rod **50**, thus effectively locking torsion rod **50** against rotation relative to lower end **131L** of gate **130**. However, lower end **131L** of gate **130** is unrestrained against rotation relative to housing **20**. Accordingly, gates **130** and torsion rods **50** can be assembled in rotary drive system **110** such that sealing surfaces **137** associated with the outer edges **139** of gates **130** will initially be closely adjacent to or in contact with the surface of rotor **120**. Optionally, torsion rods **50** may be installed with an initial pre-torque biasing gates **130** against rotor **120**. Pivoting deflection of gates 130 caused by fluid flow through rotary drive system **110** will induce torsional strain (or increase any initial torsional strain) in torsion rods 50, thus positively biasing gates **130** toward rotor **120**.

The number of rotor lobes **124** and the number of gates **130** can vary. Preferably, however, there will always be at least one fluid inlet port **116** and at least one fluid outlet port **117** located between adjacent rotor lobes **124** at any given time, and at least one gate **130** sealing between adjacent fluid inlet and outlet ports at any given time.

Torque and speed outputs of rotary drive system **110** are dependent on the length and radial height (i.e., gate lift) of chambers **140**. For a given drive system length, a smaller gate lift produces higher rotational speed and lower torque. Conversely, a larger gate lift produces higher torque and lower rotational speed. In preferred examples, different configurations of gates **130** and rotor lobes **124**, with varying levels of gate lift, can be used to achieve broad torque and speed ranges as may be required for different drilling applications, from low-speed / high-torque performance drilling to high-speed turbine applications.

Bearing assembly **100** comprises multiple bearings for transferring the various axial and radial loads between mandrel **10** and housing **20** that occur during the drilling process. Thrust bearings **102** and **103** transfer on-bottom and off-bottom operating loads, respectively, while radial bearing **104** and **105** transfers radial loads between mandrel **10** and housing **20**. In preferred examples, the thrust bearings and radial bearings are mud-lubricated PDC (polycrystalline diamond compact) insert bearings, and a small portion of the drilling fluid is diverted through the bearings to provide lubrication and cooling. In other examples, other types of mud-lubricated bearings may be used, or one or more of the bearings may be oil-sealed.

In the example shown in FIG. 2, radial loads are transferred from mandrel **10** to housing **20** through bearing **104**, not from mandrel **10** to rotor **120**. In alternative examples, however, radial loads could be transferred through rotor **120** if desired, by using rotor **120** itself as a radial bearing in lieu of radial bearing **104**.

In the embodiment shown in FIG. 9A, the arrangement of the radial and axial bearings is changed such that radial loads are carried by mandrel **10** and preferably not transferred to rotor **120**. In this example, bearing assembly **100** section comprises a lower radial bearing **301** (analogous to radial bearing **105** in FIG. 2) and an additional radial bearing **303** below the rotary drive assembly, serving the same general function as radial bearing **104** in the example shown in FIG. 2 but in a different location. Another set of bearings **304** and **305** may be used to locate rotor **120** both radially and axially.

In preferred examples, no elastomeric dynamic seals are used. Leakage is minimized by maintaining small amounts of clearance between components within drive system **110**. Small amounts of leakage will reduce the overall efficiency of the drive system, but that is acceptable for this application. Efficiency will still equal or exceed that of a Moineau power section. Moreover, with no elastomeric dynamic seals being used, the motor will be suitable for high-temperature/geothermal applications that Moineau power sections cannot withstand.

Notwithstanding the foregoing discussion of thrust bearings and radial bearings in downhole motor bearing sections, it is to be noted that the particular types and arrangements of bearings that may be used in bearing assemblies incorporating rotary drive systems in accordance with the present disclosure are not directly relevant to such rotary drive systems, and do not form part of the broadest examples thereof.

FIGS. 2 and 3 illustrate optional additional features that are beneficial but not essential to rotary drive systems in accordance with the present disclosure. One such optional feature is a flow control mechanism in the form of a relief valve **150** which protects the assembly from excessive torque loads by limiting the amount of pressure that can build up within the rotary drive assembly. Relief valve **150** provides this protection by allowing fluid to bypass the rotary drive system when the fluid pressure exceeds a pre-set pressure, through a downstream bore **154** in relief valve **150** discharging into mandrel bore **14**. The relief valve **150** illustrated in FIGS. 2 and 3 is only one non-limiting example of a device that may optionally be used to limit pressure build-up in rotary drive systems in accordance with the present disclosure.

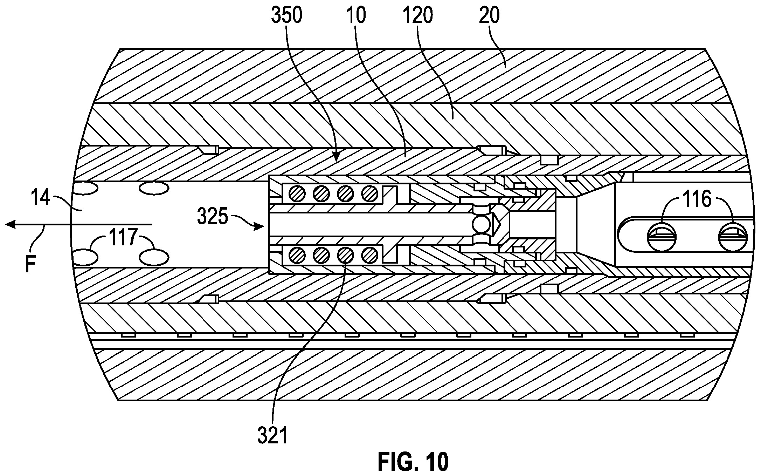

FIG. 10 illustrates one embodiment of a mechanical relief valve system **350** which can be used to limit differential pressure across the rotary drive system by bypassing flow through rotor **120**. This same mechanism could also be used as a speed control to limit RPM to a pre-set limit. Relief valve system **350** works such that fluid flow **F** enters the mechanism from right to left (as viewed with reference to FIG. 10), with relief valve system **350** sealing off flow so that it is forced through the rotary drive mechanism's fluid inlet and outlet ports and gates (as generally described previously herein). When the differential pressure across relief valve system **350** reaches a pre-set limit, a valve **325**, biased by a spring **321**, will move to the left allowing a portion of the flow to bypass the rotary drive system through the center of rotor **120**. Valve **325** could alternatively be biased mechanically or hydraulically.

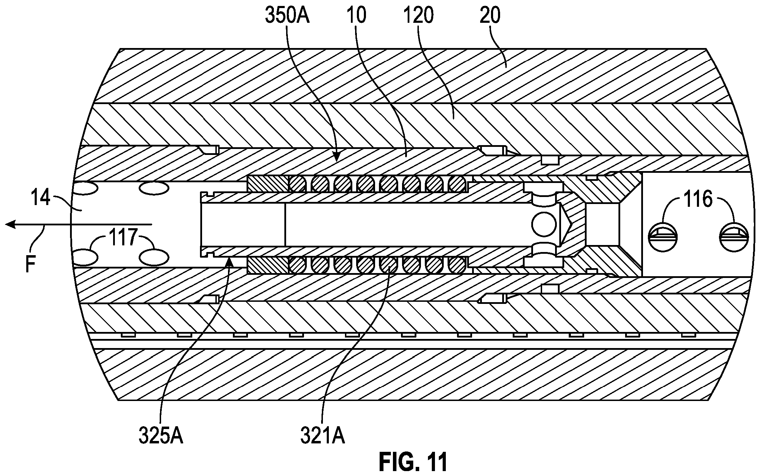

FIG. 11 illustrates an alternative mechanical relief valve assembly **350A**, which is operable in largely the same manner as described above with respect to relief valve system **350** shown in FIG. 10. Relief valve assembly **350A** works such that flow fluid enters the device from right to left, with relief valve assembly **350A** sealing off flow so that it is forced through the rotary drive mechanism's fluid inlet and exit ports and gates. When differential pressure reaches a pre-set limit, valve **325A**, biased by a spring **321A**, will move to the left allowing a portion of the flow to bypass the rotary drive system through the center of rotor **120**. Valve **325A** could alternatively be biased mechanically or hydraulically.

Alternatively, a mechanism similar to the two-speed motor disclosed in U.S. Patent No. 7,523,792 could also be used to allow an operator two different speed ranges at a given flow rate using the same rotary drive geometry. This would be accomplished by turning fluid flow on and off. Alternatively, this could be accomplished by an electronically-controlled valve system. This valve system could react to drilling conditions such as vibration, bit whirl, and stick slip, and/or it could be communicated with, either from surface or from a downhole signal generator, to change the amount of fluid bypass through rotor **120** in the rotary drive system.

Notwithstanding the preceding discussion, it is not essential to limit differential pressure across rotary drive systems in accordance with the present disclosure. Alternative examples may use other forms of flow control such as, by way of non-limiting example, a solid plate (either integral with either the mandrel or the rotor, or a separately-sealed component) to separate flow between the fluid inlet and outlet ports. Alternative examples may use a nozzle to continuously bypass a portion of the flow through the rotor in order to reduce the rotary speed of the drive section. Alternative examples may also use a burst disc to separate flow between inlet and outlet ports. In the event that the burst disc capacity is exceeded and the disc ruptures, all or a portion of the flow would subsequently bypass through the rotor. Alternative examples may incorporate a flow diverter as described in U.S. Patent No. 6,976,832 to evenly distribute fluid intake and outlet flow along all or a portion of the length of the drive section.

Alternative examples may relieve pressure by bypassing drilling fluid directly to the annulus between housing **20** and the wellbore, or, alternatively, between bent housing **200** and the wellbore.

Another optional feature, illustrated in FIG. 2), is the use of sealing plates **160**, which comprise mating wear-resistant surfaces that leak only a small amount of drilling fluid, so that nearly all of the fluid diverted to lubricate and cool the bearings is directed back through the mandrel and onward through the bit. Rotary seals could be used in place of sealing plates **160**; alternatively, a flow restrictor of conventional type or diamond material (e.g., PDC) could be used.

In an alternative example, the design could be changed to allow rotation of the stator section (housing **20** with gates **130**) relative to rotor **120** and mandrel **10**. This could be achieved, for example, by modifying the examples shown in FIGS. 1, 2, 9, and 9A. In such variant configurations, mandrel **10** would attach to the drill string, which would reverse the fluid flow path; i.e., whereas the fluid flow path **F** as shown in FIGS. 1, 2, and 9, is from right to left, the fluid flow path in the variant configurations would be from left to right, with the fluid inlet and outlet ports being suitably configured for this reversed fluid flow path. Having reference to FIGS. 2 and 9, this could necessitate design changes as follows:
- First, the bent sub could be moved to the left (i.e., lower) side of the mandrel.
- A suitable bit box sub would need to be added in place of the housing **200** to allow connection to the drill bit (alternatively, this connection could be a pin connection).
- The bypass valves would also need to be "flipped" to allow flow to bypass from left to right.
It will be readily apparent to those skilled in the art that driveshafts / clutches, additional stages in series or parallel, inlet and outlet ports, gate orientation, and bearings could be moved above or below the power section when holding the mandrel stationary and allowing the stator section (housing) to rotate.

Alternative examples may use rotary drive systems generally as disclosed in any of U.S. Patents No. 6,280,169, No. 6,468,061, and No. 6,939,117, in combination with similar coupling means within the drilling motor, and similar arrangements of bearings. These systems utilize similar principles of operation, but with alternative forms of the gate/lobe system, such as radially-actuating gates as opposed to pivoting gates, or pivoting gates connected to the mandrel and engageable by lobes formed on the bearing section housing.

For example, referring to FIG. 3, housing **20**, gates **130**, and torsion rods **50** could be replaced with the necessary components from the system of radially-actuating gates illustrated in Figure 33 in U.S. Patent No. 6,280,169. As another example, referring again to FIG. 3, housing **20**, gates **130**, torsion rods **50**, and rotor **120** could be replaced with the necessary components from the system illustrated in Figure 9A in U.S. Patent No. 6,939,117, wherein the lobes are fixed to the housing and the gates are mounted about the outer surface of the mandrel.

Having regard to the preceding discussion, it is to be appreciated that concentric rotary drive systems in accordance with the present disclosure are not limited to examples in which the gates are mounted to the housing (and deflectable into gate pockets formed in the housing) and in which gate-actuating lobes are incorporated into a mandrel concentrically rotatable within the housing. The present disclosure also extends to alternative examples having gates mounted to the mandrel (and deflectable into gate pockets formed in the mandrel) and in which gate-actuating lobes are incorporated into the housing, and also to examples incorporating radially-actuating gates.

Accordingly, one category of concentric rotary drive systems in accordance with the present disclosure can be broadly described as comprising:
- a first body and a second body, with a selected one of the bodies being coaxially disposed inside the other body to define a working fluid space therebetween, and with the second body being rotatable relative to the first body about a rotational axis;
- at least one gate pivotably supported by a selected one of the first and second bodies, and pivotable about a pivot axis parallel to the rotational axis; and
- at least one lobe provided on the body not supporting the at least one gate, with the at least one lobe being configured to contact the at least one gate during rotation of the second body.

Therefore, the component referenced previously in this Detailed Description as "housing **20**" could, in alternative examples, be characterized as either the "first body" or the "second body", with the component referenced as rotor **120** being characterized as either the "second body" or the "first body". It will also be appreciated that in certain alternative examples the rotary drive system could be configured such that the selected body coaxially disposed within the other body could be non-rotating relative to the drill string; i.e., the other (or outer) body would be rotatable relative to the "selected" (i.e., inner) body. Persons skilled in the art will appreciate that such alternative examples can be put in to practice on the basis of the present disclosure, modified as a given example may require having reference to the information provided herein and common general knowledge in the art, and without need for specific illustration, significant experimentation, or inventive input.

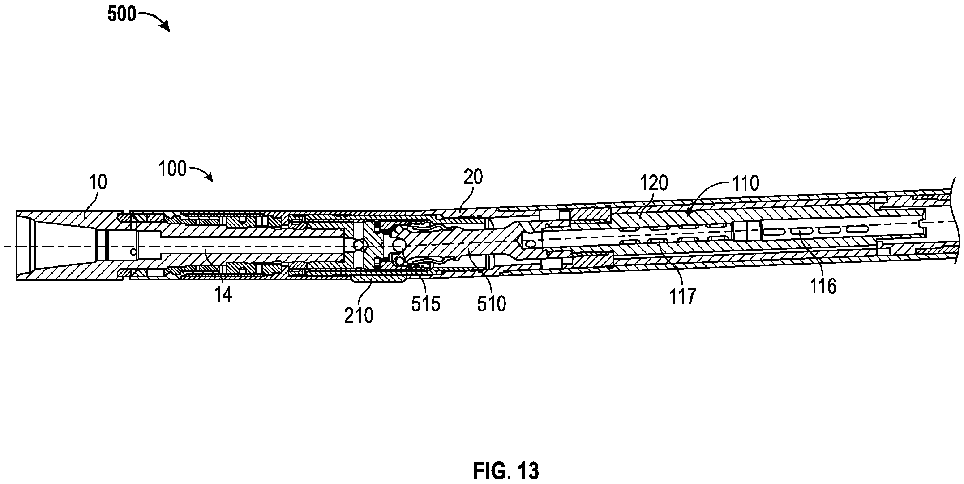

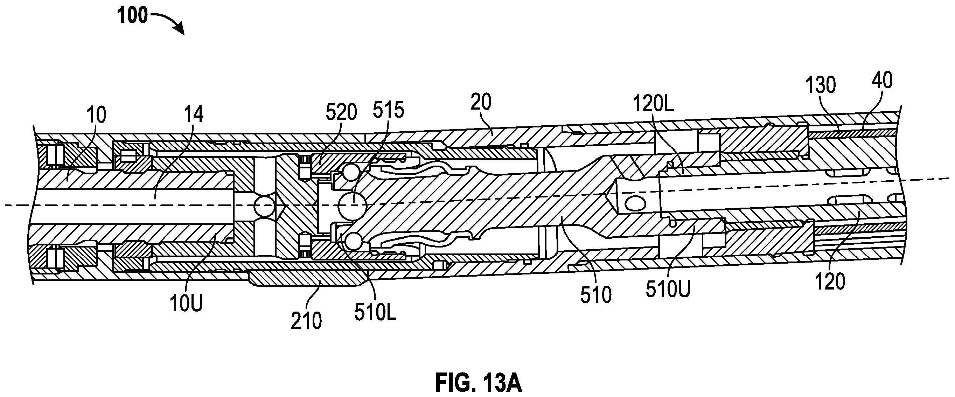

FIGS. 13 and 13A illustrate an alternative example **500** of a downhole motor incorporating a concentric rotary drive system **110** in accordance with the present disclosure. In this variant example, the bent sub **210** is located below rotary drive system **110**, and rotary drive system **110** is operatively connected to the motor's bearing section **100** by a drive shaft **510**. Because rotary drive system **110** does not operate eccentrically like a conventional downhole motor drive section, drive shaft **510** requires a universal joint (U-joint) **515** only at its lower end **510L**, where it engages a lower drive shaft housing **520** coupled to the upper end **10U** of mandrel **10** of bearing section **100**, adjacent to bent sub **210**. At its upper end **510U**, drive shaft **510** is connected rigidly and coaxially to the lower end **120L** of rotor **120**, by any functionally suitable means.

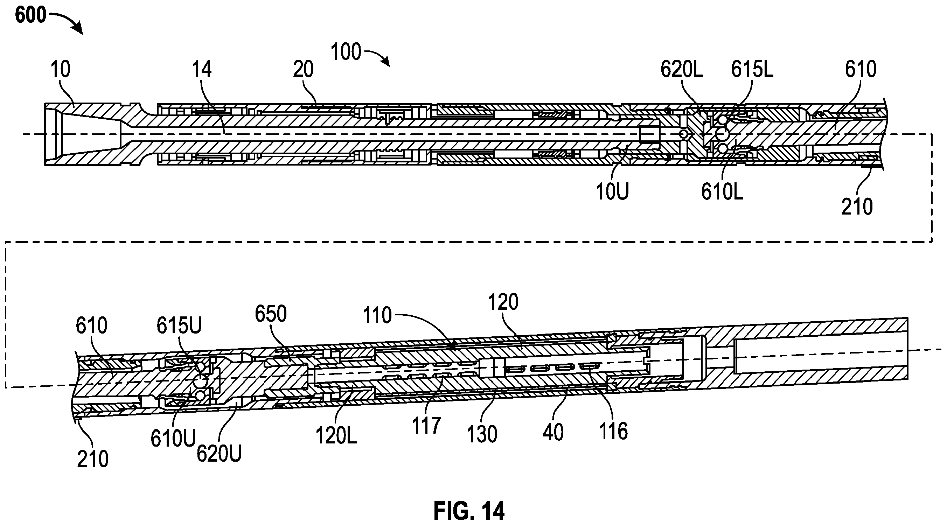

FIG. 14 illustrates a further alternative example **600** of a downhole motor incorporating a concentric rotary drive system in accordance with the present disclosure. In this example, rotary drive system **110** is connected to a conventional bearing section **100** by means of a conventional drive shaft **610** having upper and lower U-joints **615U** and **615L** at its upper and lower ends **610U** and **610L**. Lower U-joint **615L** engages a lower drive shaft housing **620L** coupled to the upper end **10U** of mandrel **10**, similar to the example shown in FIGS. 13 and 13A. In this example, bent sub **210** is located approximately midway between U-joints **615U** and **615L**.

Upper U-joint **615U** engages an upper drive shaft housing **620U** which in turn is connected rigidly and coaxially to lower end **120L** of rotor **120**. In the specific example shown in FIG. 14, upper drive shaft housing **620U** connects to rotor **120** by means of a threaded and splined coupling **650** generally similar to coupling **410** shown in FIGS. 12, 12A, and 12B. However, this is by way of non-limiting example only, and the connection between upper drive shaft housing **620U** and rotor **120** could alternatively be effected by any functionally suitable means.

The embodiments of rotary drive system **110** illustrated in the Figures may be referred to as a single-stage drive system; i.e., having a single set of gates **130** associated with a lobed rotor **120**. However, alternative examples of rotary drive system **110** may incorporate multiple-stage drives as necessary or desirable to achieve required performance.

For examples having multiple power sections aligned in series, the power sections can be coupled by means of a splined and/or threaded connection, such as, for example, the connection illustrated in FIGS. 12, 12A, and 12B. Alternatively the power sections could be coupled by means of an arrangement as in the exemplary example in FIG. 9, with component **129** being used on the right end of the rotor to connect to another power section of similar type, or to connect a power section as disclosed herein to a conventional Moineau or turbine-type drive system. This arrangement could also use a driveshaft between the rotary drive system and a Moineau or turbine drive system. This arrangement would allow for increased torque output, but with higher differential pressure than using just one power section.

In further alternative examples, a gear box could be incorporated into the coupling between two power sections coupled in series.

For examples having multiple power sections arranged to be run in parallel, two power sections as disclosed herein could be run end to end and coupled by means of splined, threaded, or clutch-type engagement as stated above. A flow diverter would be needed to send a portion of the flow past the first stage to the second stage only and then on to the bit. This flow diverter would allow flow to enter either the first stage or the second stage only, and then exit to the bit without entering the other stage. This arrangement would allow increased torque output at the same differential pressure across the rotary drive system.

It will be readily appreciated by those skilled in the art that various modifications to examples in accordance with the present disclosure may be devised without departing from the scope of the appended claims, including modifications which may use equivalent structures or materials hereafter conceived or developed. It is to be especially understood that the scope of the present disclosure is not intended to be limited to described or illustrated examples, and that the substitution of a variant of a claimed element or feature, without any substantial resultant change in functionality, will not constitute a departure from the scope of the disclosure. It is also to be appreciated that the different teachings of the examples described and discussed herein may be employed separately or in any suitable combination to produce desired results.

In this patent document, any form of the word "comprise" is to be understood in its non-limiting sense to mean that any item following such word is included, but items not specifically mentioned are not excluded. A reference to an element by the indefinite article "a" does not exclude the possibility that more than one of the element is present, unless the context clearly requires that there be one and only one such element.

Any use of any form of the terms "connect", "engage", "couple", "attach", or any other term describing an interaction between elements is not meant to limit the interaction to direct interaction between the subject elements, and may also include indirect interaction between the elements such as through secondary or intermediary structure.

Relational terms such as "parallel", "concentric", and "coaxial" are not intended to denote or require absolute mathematical or geometrical precision. Accordingly, such terms are to be understood as denoting or requiring substantial precision only (e.g., "substantially parallel") unless the context clearly requires otherwise.

Wherever used in this document, the terms "typical" and "typically" are to be interpreted in the sense of representative of common usage or practice, and are not to be interpreted as implying essentiality or invariability.

## Claims

1. A system, comprising:
a bearing assembly (100, 400) including a cylindrical housing (20) and an elongate mandrel (10) coaxially and rotatably disposed in the cylindrical housing (20), the mandrel (10) having a first end configured to couple to a drill bit, a second end (10U) opposite the first end, and a central bore (14) extending axially from the first end to the second end;
a rotary drive system (110) coupled to the bearing assembly (100, 400) and including:
a rotor (120) rotatably disposed within the housing (20);
an annular space (40) between the rotor (120) and the housing (20);
wherein the rotor (120) includes a central rotor axis, a first end (120L), a second end opposite the first end (120L), a rotor bore extending axially from the first end (120L) to the second end, a plurality of fluid inlet ports (116) extending radially from the rotor bore to the annular space (40), and a plurality of fluid outlet ports (117) extending radially from the annular space (40) to the rotor bore;
wherein the first end (120L) of the rotor (120) is coupled to the second end (10U) of the mandrel (10);
a plurality of elongate gates (130) disposed within the annular space (40), each of the plurality of elongate gates (130) configured to engage the rotor (120) and the housing (20); and
a plurality of longitudinal lobes (124) extending radially within the annular space (40);
wherein the plurality of longitudinal lobes (124) and the plurality of elongate gates (130) divide the annular space (40) into a plurality of circumferentially adjacent, axially extending longitudinal chambers (140);
a first fluid flow path defined by the annular space (40) between the plurality of inlet ports (116) and the plurality of outlet ports (117);
wherein the rotor (120) is configured to rotate relative to the housing (20) when a fluid is circulated along the first fluid flow path;
wherein the mandrel (10) and the rotor are (120) coaxially aligned.

2. The system of claim 1, wherein the second end (10U) of the mandrel (10) is directly connected to the first end (120L) of the rotor (120).

3. The system of claim 1 or 2, wherein the second end (10U) of the mandrel (10) is directly connected to the first end (120L) of the rotor (120) with one of a splined connection, a threaded connection, and corresponding mating lugs (19, 129).

4. The system of any of claim 1, wherein the second end (10U) of the mandrel (10) is coupled to the first end (120L) of the rotor (120) with a coupling member (410).

5. The system of claim 4, wherein the coupling member (410) includes:
a first end;
a second end opposite the first end;
internal threading (425) disposed on the first end; and
splines (432) disposed on the second end;
wherein the second end (10U) of the mandrel (10) includes external threading (15) that is configured to engage with the internal threading (425) on the first end of the coupling member (410); and
wherein the first end (120L) of the rotor (120) includes splines (115) that are configured to engage with the splines (432) disposed on the second end of the coupling member (410).

6. The system of any of claims 1 to 5, further comprising a bent housing (200) coupled to an upper end of the housing (20) of the bearing assembly (100, 400).

7. The system of any of claims 1 to 6, wherein each of the plurality of elongate gates (130) is pivotally coupled to the housing (20) and each is configured to pivot about a pivot axis that is parallel to and radially spaced from the rotor axis.

8. The system of any of claims 1 to 7, wherein each of the plurality of elongate gates (130) has a free edge and wherein the free edge is biased into engagement with the rotor (120).

9. The system of any of claims 1 to 8, further comprising: a bent housing (200) coupled to the an end of the housing (20) such that the rotary drive system (110) is disposed between the bent housing (200) and the bearing assembly (100, 400).

10. The system of any of claims 1 to 9, wherein the bearing assembly (400) further includes a first radial bearing (440) and a second radial bearing (440);
wherein the first radial bearing (440) and the second radial bearing (440) are each configured to support radially directed loads with respect to the central mandrel axis; and
wherein the first radial bearing (440) is proximate the first end (120L) of the rotor (120) and the second radial bearing (440) is proximate the second end of the rotor (120).

11. The system of any of claims 1 to 10, wherein each and every one of the fluid inlet ports (116) is axially spaced from each and every one of the fluid outlet ports (117); and wherein the system further comprises a flow control assembly (150) disposed in
the rotor bore and configured to control the flow of the fluid along the first flow path to regulate one of a rotational speed of the rotor (120) or a torque applied to the rotor (120).

12. The system of claim 11, further comprising:
a second fluid flow path defined by the rotor bore between the plurality of inlet ports (116) and the plurality of outlet ports (117);
wherein the flow control assembly selectively diverts a portion of the fluid to the second flow path when a differential pressure between the plurality of inlet ports (116) and the plurality of outlet ports (117) reaches a pre-determined value.

13. The system of claim 12, wherein the flow control assembly comprises a relief valve (150).

14. The system of claim 11, wherein the flow control assembly is axially disposed between the plurality of fluid inlet ports (116) and the plurality of fluid outlet ports (117).

## Patentansprüche

1. System, das Folgendes umfasst:
eine Lageranordnung (100, 400), die ein zylindrisches Gehäuse (20) und einen länglichen Dorn (10) beinhaltet, der koaxial und drehbar in dem zylindrischen Gehäuse (20) eingerichtet ist, wobei der Dorn (10) ein erstes Ende, das konfiguriert ist, um mit einem Meißel gekoppelt zu werden, ein zweites Ende (10U) gegenüber dem ersten Ende und eine zentrale Bohrung (14) aufweist, die sich von dem ersten Ende zu dem zweiten Ende axial erstreckt;
ein Drehantriebssystem (110), das mit der Lageranordnung (100, 400) gekoppelt ist und Folgendes beinhaltet:
einen Rotor (120), der innerhalb des Gehäuses (20) drehbar eingerichtet ist;
einen ringförmigen Raum (40) zwischen dem Rotor (120) und dem Gehäuse (20);
wobei der Rotor (120) eine zentrale Rotorachse, ein erstes Ende (120L), ein zweites Ende gegenüber dem ersten Ende (120L), eine Rotorbohrung, die sich von dem ersten Ende (120L) zu dem zweiten Ende axial erstreckt, mehrere Fluideinlassöffnungen (116), die sich von der Rotorbohrung zu dem ringförmigen Raum (40) radial erstrecken, und mehrere Fluidauslassöffnungen (117) beinhaltet, die sich von dem ringförmigen Raum (40) zu der Rotorbohrung radial erstrecken;
wobei das erste Ende (120L) des Rotors (120) mit dem zweiten Ende (10U) des Dorns (10) gekoppelt ist;
mehrere längliche Schieber (130), die innerhalb des ringförmigen Raums (40) eingerichtet sind, wobei jeder der mehreren länglichen Schieber (130) konfiguriert ist, um den Rotor (120) und das Gehäuse (20) in Eingriff zu nehmen; und
mehrere Längsnocken (124), die sich innerhalb des ringförmigen Raums (40) radial erstrecken;
wobei die mehreren Längsnocken (124) und die mehreren länglichen Schieber (130) den ringförmigen Raum (40) in mehrere in Umfangsrichtung angrenzende, sich axial erstreckende Längskammern (140) unterteilen;
einen ersten Fluidströmungsweg, der durch den ringförmigen Raum (40) zwischen den mehreren Einlassöffnungen (116) und den mehreren Auslassöffnungen (117) definiert wird;
wobei der Rotor (120) konfiguriert ist, um sich relativ zu dem Gehäuse (20) zu drehen, wenn ein Fluid entlang des ersten Fluidströmungswegs zirkuliert wird;
wobei der Dorn (10) und der Rotor (120) koaxial ausgerichtet sind.

2. System nach Anspruch 1, wobei das zweite Ende (10U) des Dorns (10) mit dem ersten Ende (120L) des Rotors (120) direkt verbunden ist.

3. System nach Anspruch 1 oder 2, wobei das zweite Ende (10U) des Dorns (10) mit dem ersten Ende (120L) des Rotors (120) über eine Keilverbindung, eine Gewindeverbindung oder entsprechende Gegenansätze (19, 129) direkt verbunden ist.

4. System nach einem der Ansprüche 1, wobei das zweite Ende (10U) des Dorns (10) mit dem ersten Ende (120L) des Rotors (120) über ein Kopplungselement (410) gekoppelt ist.

5. System nach Anspruch 4, wobei das Kopplungselement (410) Folgendes beinhaltet:
ein erstes Ende;
ein zweites Ende gegenüber dem ersten Ende;
ein Innengewinde (425), das an dem ersten Ende eingerichtet ist; und
Keile (432), die an dem zweiten Ende eingerichtet sind;
wobei das zweite Ende (10U) des Dorns (10) ein Außengewinde (15) beinhaltet, das konfiguriert ist, um das Innengewinde (425) an dem ersten Ende des Kopplungselements (410) in Eingriff zu nehmen; und
wobei das erste Ende (120L) des Rotors (120) Keile (115) beinhaltet, die konfiguriert sind, um die Keile (432) in Eingriff zu nehmen, die an dem zweiten Ende des Kopplungselements (410) eingerichtet sind.

6. System nach einem der Ansprüche 1 bis 5, das ferner ein gebogenes Gehäuse (200) umfasst, das mit einem oberen Ende des Gehäuses (20) der Lageranordnung (100, 400) gekoppelt ist.

7. System nach einem der Ansprüche 1 bis 6, wobei jeder der mehreren länglichen Schieber (130) mit dem Gehäuse (20) schwenkbar gekoppelt ist und jeder konfiguriert ist, um um eine Schwenkachse zu schwenken, die parallel zu dem Rotor und von der Rotorachse radial beabstandet ist.

8. System nach einem der Ansprüche 1 bis 7, wobei jeder der mehreren länglichen Schieber (130) eine freie Kante aufweist und wobei die freie Kante in den Eingriff mit dem Rotor (120) vorgespannt ist.

9. System nach einem der Ansprüche 1 bis 8, das ferner Folgendes umfasst: ein gebogenes Gehäuse (200), das mit einem Ende des Gehäuses (20) derart gekoppelt ist, dass das Drehantriebssystem (110) zwischen dem gebogenen Gehäuse (200) und der Lageranordnung (100, 400) eingerichtet ist.

10. System nach einem der Ansprüche 1 bis 9, wobei die Lageranordnung (400) ferner ein erstes radiales Lager (440) und ein zweites radiales Lager (440) beinhaltet;
wobei das erste radiale Lager (440) und das zweite radiale Lager (440) jeweils konfiguriert sind, um radial gerichtete Lasten hinsichtlich der zentrale Dornachse zu tragen; und
wobei sich das erste radiale Lager (440) nahe dem ersten Ende (120L) des Rotors (120) befindet und sich das zweite radiale Lager (440) nahe dem zweiten Ende des Rotors (120) befindet.

11. System nach einem der Ansprüche 1 bis 10, wobei jede einzelne der Fluideinlassöffnungen (116) von jeder einzelnen der Fluidauslassöffnungen (117) axial beabstandet ist; und
wobei das System ferner eine Strömungssteuerungsanordnung (150) umfasst, die in der Rotorbohrung eingerichtet und konfiguriert ist, um die Strömung des Fluids entlang des ersten Strömungswegs zu steuern, um eine Drehzahl des Rotors (120) oder ein auf den Rotor (120) ausgeübtes Drehmoment zu regulieren.

12. System nach Anspruch 11, das ferner Folgendes umfasst:
einen zweiten Fluidströmungsweg, der durch die Rotorbohrung zwischen den mehreren Einlassöffnungen (116) und den mehreren Auslassöffnungen (117) definiert wird;
wobei die Strömungssteuerungsanordnung einen Anteil des Fluids zu dem zweiten Strömungsweg wahlweise umleitet, wenn ein Differenzdruck zwischen den mehreren Einlassöffnungen (116) und den mehreren Auslassöffnungen (117) einen zuvor bestimmten Wert erreicht.

13. System nach Anspruch 12, wobei die Strömungssteuerungsanordnung ein Entlastungsventil (150) umfasst.

14. System nach Anspruch 11, wobei die Strömungssteuerungsanordnung zwischen den mehreren Fluideinlassöffnungen (116) und den mehreren Fluidauslassöffnungen (117) axial eingerichtet ist.

## Revendications

1. Système, comprenant :
un ensemble palier (100, 400) comportant un boîtier cylindrique (20) et un mandrin allongé (10) disposé de manière coaxiale et rotative dans le boîtier cylindrique (20), le mandrin (10) ayant une première extrémité conçue pour s'accoupler à un foret, une seconde extrémité (10U) opposée à la première extrémité, et un alésage central (14) s'étendant de manière axiale de la première extrémité à la seconde extrémité ;
un système d'entraînement rotatif (110) accouplé à l'ensemble palier (100, 400) et comportant :
un rotor (120) disposé de manière rotative à l'intérieur du boîtier (20) ;
un espace annulaire (40) entre le rotor (120) et le boîtier (20) ;
dans lequel le rotor (120) comporte un axe de rotor central, une première extrémité (120L), une seconde extrémité opposée à la première extrémité (120L), un alésage de rotor s'étendant de manière axiale de la première extrémité (120L) à la seconde extrémité, une pluralité d'orifices d'entrée de fluide (116) s'étendant de manière radiale de l'alésage de rotor à l'espace annulaire (40), et une pluralité d'orifices de sortie de fluide (117) s'étendant de manière radiale de l'espace annulaire (40) à l'alésage de rotor ;
dans lequel la première extrémité (120L) du rotor (120) est accouplée à la seconde extrémité (10U) du mandrin (10) ;
une pluralité de grilles allongées (130) disposées à l'intérieur de l'espace annulaire (40), chacune de la pluralité de grilles allongées (130) étant conçue pour mettre en prise le rotor (120) et le boîtier (20) ; et
une pluralité de lobes longitudinaux (124) s'étendant de manière radiale à l'intérieur de l'espace annulaire (40) ;
dans lequel la pluralité de lobes longitudinaux (124) et la pluralité de grilles allongées (130) divisent l'espace annulaire (40) en une pluralité de chambres longitudinales adjacentes de manière circonférentielle s'étendant de manière axiale (140) ;
un premier trajet d'écoulement de fluide défini par l'espace annulaire (40) entre la pluralité d'orifices d'entrée (116) et la pluralité d'orifices de sortie (117) ;
dans lequel le rotor (120) est conçu pour tourner par rapport au boîtier (20) lorsqu'un fluide circule le long du premier trajet d'écoulement de fluide ;
dans lequel le mandrin (10) et le rotor sont (120) alignés de manière coaxiale.

2. Système selon la revendication 1, dans lequel la seconde extrémité (10U) du mandrin (10) est directement raccordée à la première extrémité (120L) du rotor (120).

3. Système selon la revendication 1 ou 2, dans lequel la seconde extrémité (10U) du mandrin (10) est directement raccordée à la première extrémité (120L) du rotor (120) avec l'un d'un raccord cannelé, d'un raccord fileté et de tenons de liaison correspondants (19, 129).

4. Système selon l'une quelconque des revendications 1, dans lequel la seconde extrémité (10U) du mandrin (10) est accouplée à la première extrémité (120L) du rotor (120) avec un élément d'accouplement (410).

5. Système selon la revendication 4, dans lequel l'élément d'accouplement (410) comporte :
une première extrémité ;
une seconde extrémité opposée à la première extrémité ;
un filetage interne (425) disposé sur la première extrémité ; et
des cannelures (432) disposées sur la seconde extrémité ;
dans lequel la seconde extrémité (10U) du mandrin (10) comporte un filetage externe (15) qui est conçu pour entrer en prise avec le filetage interne (425) sur la première extrémité de l'élément d'accouplement (410) ; et
dans lequel la première extrémité (120L) du rotor (120) comporte des cannelures (115) qui sont conçues pour entrer en prise avec les cannelures (432) disposées sur la seconde extrémité de l'élément d'accouplement (410).

6. Système selon l'une quelconque des revendications 1 à 5, comprenant en outre un boîtier coudé (200) accouplé à une extrémité supérieure du boîtier (20) de l'ensemble palier (100, 400).

7. Système selon l'une quelconque des revendications 1 à 6, dans lequel chacune de la pluralité de grilles allongées (130) est accouplée de manière pivotante au boîtier (20) et chacune est conçue pour pivoter autour d'un axe de pivot qui est parallèle et espacé de manière radiale de l'axe de rotor.

8. Système selon l'une quelconque des revendications 1 à 7, dans lequel chacune de la pluralité de grilles allongées (130) présente un bord libre et dans lequel le bord libre est sollicité en mise en prise avec le rotor (120).

9. Système selon l'une quelconque des revendications 1 à 8, comprenant en outre : un boîtier coudé (200) accouplé à une extrémité du boîtier (20) de telle sorte que le système d'entraînement rotatif (110) est disposé entre le boîtier coudé (200) et l'ensemble palier (100, 400).

10. Système selon l'une quelconque des revendications 1 à 9, dans lequel l'ensemble palier (400) comporte en outre un premier palier radial (440) et un second palier radial (440) ;
dans lequel le premier palier radial (440) et le second palier radial (440) sont chacun conçus pour assurer le soutien des charges dirigées de manière radiale par rapport à l'axe central du mandrin ; et
dans lequel le premier palier radial (440) est à proximité de la première extrémité (120L) du rotor (120) et le second palier radial (440) est à proximité de la seconde extrémité du rotor (120).

11. Système selon l'une quelconque des revendications 1 à 10, dans lequel chacun des orifices d'entrée de fluide (116) est espacé de manière axiale de chacun des orifices de sortie de fluide (117) ; et
dans lequel le système comprend en outre un ensemble de régulation de débit (150) disposé dans l'alésage du rotor et conçu pour réguler l'écoulement du fluide le long du premier trajet d'écoulement pour régler l'une d'une vitesse de rotation du rotor (120) ou d'un couple appliqué au rotor (120).

12. Système selon la revendication 11, comprenant en outre :
un second trajet d'écoulement de fluide défini par l'alésage de rotor entre la pluralité d'orifices d'entrée (116) et la pluralité d'orifices de sortie (117) ;
dans lequel l'ensemble de régulation de débit détourne sélectivement une partie du fluide vers le second trajet d'écoulement lorsqu'une pression différentielle entre la pluralité d'orifices d'entrée (116) et la pluralité d'orifices de sortie (117) atteint une valeur prédéterminée.

13. Système selon la revendication 12, dans lequel l'ensemble de régulation de débit comprend une soupape de décharge (150).

14. Système selon la revendication 11, dans lequel l'ensemble de régulation de débit est disposé de manière axiale entre la pluralité d'orifices d'entrée de fluide (116) et la pluralité d'orifices de sortie de fluide (117).
